# EUROPÄISCHE PATENTSCHRIFT

(11) **EP 0 402 512 B1**
(45) Veröffentlichungstag und Bekanntmachung des Hinweises auf die Patenterteilung: **04.08.1993**
(21) Anmeldenummer: 89110932.4
(22) Anmeldetag: 16.06.1989
(51) Int. Cl.: B62M 3/08

(54) **Sicherheitspedal für Fahrräder u.dgl.**
Safely pedal for bicycles and the like
Pedale de sécurité pour bicyclettes

(43) Veröffentlichungstag der Anmeldung: 19.12.1990
(73) Patentinhaber: Look S.A., 58004 Nevers cedex (FR)
(72) Erfinder: Peyre, Henri, F-58270 Saint Benin d'Azy (FR)
(74) Vertreter: Manitz, Gerhart, Dr. Dipl.-Phys.

(56) Entgegenhaltungen:
- WO-A-89/06619
- DE-A- 3 426 103
- DE-A- 3 638 155
- FR-A- 2 609 270
- FR-A- 2 619 781

## Beschreibung

Die Erfindung betrifft ein Sicherheitspedal für Fahrräder u.dgl. zur auslösbaren Fixierung eines dem Pedal angepaßten Schuhs, welcher nach Fixierung am Pedal durch eine gegen den Widerstand einer Auslösekraft bzw. -federung ausführbare Schwenkung um eine zur Pedalachse etwa senkrechte Schwenkachse vom Pedal trennbar ist, wobei ein schuhseitiges Kupplungsorgan mit einem pedalseitigen Kupplungsorgan kuppelbar ist, welches am Pedal aus einer Normallage gegen den Widerstand der Auslösekraft bzw. -federung um die Schwenkachse ausschwenkbar angeordnet ist, und wobei pedalseitige Riegelteile sowie zugeordnete schuhseitige Gegenriegelteile bei miteinander gekuppelten schuh- und pedalseitigen Kupplungsorganen sowie in der Normallage befindlichem pedalseitigen Kupplungsorgan zur Fixierung des Schuhs in im wesentlichen nur formschlüssigem Riegeleingriff stehen und beim Ausschwenken von schuh- und pedalseitigem Kupplungsorgan aus der Normallage zumindest teilweise zur Freigabe des Schuhs aus dem formschlüssigen Riegeleingriff austreten.

Ein derartiges Sicherheitspedal ist aus der FR-A 26 19 781 bekannt. Dabei ist auf der Unterseite der Schuhsohle eine als schuhseitiges Kupplungsorgan dienende Platte fest angeordnet, welche mit pedalseitigen Halteteilen zusammenwirkt, die als pedalseitiges Kupplungsorgan angeordnet sind und die Ränder der vorgenannten Platte formschlüssig umgreifen. Durch eine federnde Anordnung mindestens eines der Halteteile kann der Schuh vom Pedal gelöst bzw. mit dem Pedal gekuppelt werden.

Im übrigen ist es beispielsweise aus der DE-A 34 26 103 sowie der DE-A 36 38 155 bekannt, Sicherheitspedale mit federnden Rastelementen auszurüsten, die mit an bzw. unter der Schuhsohle angeordneten schuhseitigen Gegenrastelementen zusammenwirken und so gestaltet sind, daß die pedalseitigen Rastelemente federnd ausweichen, wenn der zuvor am Pedal fixierte Schuh mit hinreichender Kraft um eine zur Schuhsohle etwa senkrechte Achse gedreht wird.

Bei derartigen bekannten Sicherheitspedalen kann sich die Auslösekraft unter Umständen durch Verschmutzung oder Verschleiß erheblich ändern.

Das Auslöseverhalten eines Sicherheitspedales sollte jedoch möglichst über längere Zeit unverändert bleiben, um dem Radfahrer die notwendige Sicherheit zu bieten und überraschende Fehlauslösungen, die mit einer erheblichen Unfallgefahr verbunden sind, zu vermeiden.

Deshalb ist es Aufgabe der Erfindung, ein Sicherheitspedal mit besonders gut reproduzierbarem Betriebsverhalten zu schaffen.

Diese Aufgabe wird erfindungsgemäß bei einem Sicherheitspedal der eingangs angegebenen Art dadurch gelöst, daß das schuhseitige Kupplungsorgan durch Formschluß - etwa nach Art einer Klauenkupplung - drehfest mit dem pedalseitigen Kupplungsorgan kuppelbar ist.

Die Erfindung beruht auf dem allgemeinen Gedanken, den Schuh am Pedal im wesentlichen nur durch formschlüssig zusammenwirkende Riegel und Gegenriegelteile zu fixieren, deren Formschluß durch die zur Trennung von Pedal und Schuh auszuführende Drehbewegung soweit aufgehoben wird, daß der Schuh vom Pedal abgehoben werden kann. Während der genannten Drehbewegung muß im wesentlichen nur der Widerstand der der entsprechenden Drehung des pedalseitigen Kupplungsorganes entgegenwirkenden Auslösekraft bzw. -federung überwunden werden. Dieser Widerstand ist gut reproduzierbar, weil sich die die Auslösekraft bestimmenden Elemente sowie die Auslösefederung am bzw. im Pedal geschützt unterbringen lassen bzw. in ihrer Wirkung nicht durch Verschleiß oder Verschmutzung schuhseitiger Teile beeinflußt werden. Da bei einer Entriegelung der Riegel- und Gegenriegelteile - anders als bei der Entrastung von federnden Rast- und Gegenrastelementen - kein nennenswerter Kraftschluß überwunden werden muß, können Verschleiß bzw. Verschmutzungen an den Riegel- und Gegenriegelteilen auf das Auslöseverhalten des Sicherheitspedales keinerlei nennenswerten Einfluß haben.

Gemäß einer bevorzugten Ausführungsform der Erfindung kann vorgesehen sein, daß als pedalseitiges Kupplungsorgan eine die Trittfläche bzw. ein Trittflächenteil des Pedales bildende Platte bzw. Plattenanordnung nach Art eines Drehtellers angeordnet und mit einem als schuhseitiges Kupplungsorgan angeordneten plattenartigen Sohlenbereich bzw. sohlenfesten Teil des Schuhs zusammenwirkt. Bei dieser Bauart läßt sich eine besonders geringe vertikale Höhe des Sicherheitspedales erreichen.

Dabei ist des weiteren zweckmäßigerweise vorgesehen, an der pedalseitigen Platte oder Plattenanordnung und/oder am plattenartigen Sohlenbereich bzw. sohlenfesten Teil aus der jeweiligen Plattenebene herausragende Vorsprünge bzw. Stege anzuordnen, welche mit Aussparungen, Nuten bzw. Rändern an der Platte bzw. Plattenanordnung und/oder am plattenartigen Sohlenbereich bzw. sohlenfesten Teil nach Art der Klauenkupplung zusammenwirken und eine drehfeste Verbindung zwischen Schuh und Platte bzw. Plattenanordnung ermöglichen.

Die pedalseitigen Riegelelemente können an einem Grundkörper des Pedals angeordnet sein, an dem das pedalseitige Kupplungsorgan um die Schwenkachse drehbar angeordnet ist. Bei dieser Ausführungsform kann zur Entriegelung des Schuhs dessen Schwenkbewegung beim Auslösen ausgenutzt werden, wobei die schuhseitigen Gegenriegelteile aus dem formschlüssigen Riegeleingriff mit den pedalseitigen Riegelteilen freikommen.

Stattdessen ist es auch möglich und vorteilhaft, die pedalseitigen Riegelteile zumindest teilweise am pedalseitigen Kupplungsorgan anzuordnen.

Bei der letzteren Bauweise besteht die Möglichkeit, die pedalseitigen Riegelteile in konstruktiv einfacher Weise als aktive Riegelteile auszuführen, die bei der Auslenkung des pedalseitigen Kupplungsorganes aus der Normallage einen Entriegelungshub ausführen.

Hierzu kann zweckmäßigerweise vorgesehen sein, die pedalseitigen Riegelteile mit Rastorganen des pedalseitigen Kupplungsorganes zu kombinieren, welche das pedalseitige Kupplungsorgan in dessen Normallage oder in dessen ausgeschwenkter Lage zu verrasten vermögen und dementsprechend bei der Ausschwenkung des pedalseitigen Kupplungsorganes einen Rasthub ausführen, welcher die Verschiebung des jeweiligen pedalseitigen Riegelteiles in eine Entriegelungslage bewirken kann.

Im übrigen wird hinsichtlich bevorzugter Merkmale der Erfindung auf die Ansprüche sowie die nachfolgende Beschreibung besonders bevorzugter Ausführungsformen der Erfindung anhand der Zeichnung verwiesen.

Dabei zeigt
- Fig. 1: einen vertikalen Längsschnitt einer ersten Ausführungsform des erfindungsgemäßen Sicherheitspedales, entsprechend der Schnittlinie I-I in Fig. 2, wobei gleichzeitig das am Pedal fixierte schuhseitige Kupplungsorgan in entsprechendem Längsschnitt dargestellt ist,
- Fig. 2: einen Horizontalschnitt dieses Sicherheitspedales entsprechend der Schnittlinie II-II in Fig. 1, wobei das plattenförmige pedalseitige Kupplungsorgan seine Normallage einnimmt,
- Fig. 3: ein der Fig. 2 entsprechendes Schnittbild, jedoch mit aus der Normallage ausgeschwenktem pedalseitigen Kupplungsorgan,
- Fig. 4: eine Ansicht der Unterseite des schuhseitigen Kupplungsorganes,
- Fig. 5: einen vertikalen Längsschnitt einer zweiten Ausführungsform des erfindungsgemäßen Sicherheitspedales entsprechend der Schnittlinie V-V in Fig. 6,
- Fig. 6: einen Horizontalschnitt dieses Sicherheitspedales entsprechend der Schnittlinie VI-VI in Fig. 5, wobei das plattenförmige schuhseitige Kupplungsorgan wiederum seine Normallage einnimmt,
- Fig. 7: ein der Fig. 6 entsprechendes Schnittbild, jedoch mit aus der Normallage ausgeschwenktem pedalseitigen Kupplungsorgan,
- Fig. 8: einen vertikalen Längsschnitt einer dritten Ausführungsform des erfindungsgemäßen Sicherheitspedales entsprechend der Schnittlinie VIII-VIII in Fig. 9,
- Fig. 9: einen Horizontalschnitt dieses Sicherheitspedales entsprechend der Schnittlinie IX-IX in Fig. 8 mit in Normallage befindlichem plattenförmigen pedalseitigen Kupplungsorgan,
- Fig. 10: ein der Fig. 9 entsprechendes Schnittbild mit aus der Normallage ausgeschwenkten pedalseitigen Kupplungsorgan,
- Fig. 11: einen vertikalen Längsschnitt einer vierten Ausführungsform des erfindungsgemäßen Sicherheitspedales entsprechend der Schnittlinie XI in Fig. 12,
- Fig. 12: einen Horizontalschnitt dieses Sicherheitspedales entsprechend der Schnittlinie XII-XII in Fig. 11, wobei sich das als Plattenanordnung ausgebildete pedalseitige Kupplungsorgan in seiner Normallage befindet,
- Fig. 13: ein der Fig. 12 entsprechendes Schnittbild, jedoch mit aus der Normallage ausgeschwenktem pedalseitigen Kupplungsorgan,
- Fig. 14: ein der Fig. 9 entsprechendes Schnittbild einer abgeänderten Ausführungsform und
- Fig. 15: ein der Fig. 12 entsprechendes Schnittbild einer abgewandelten Ausführungsform.

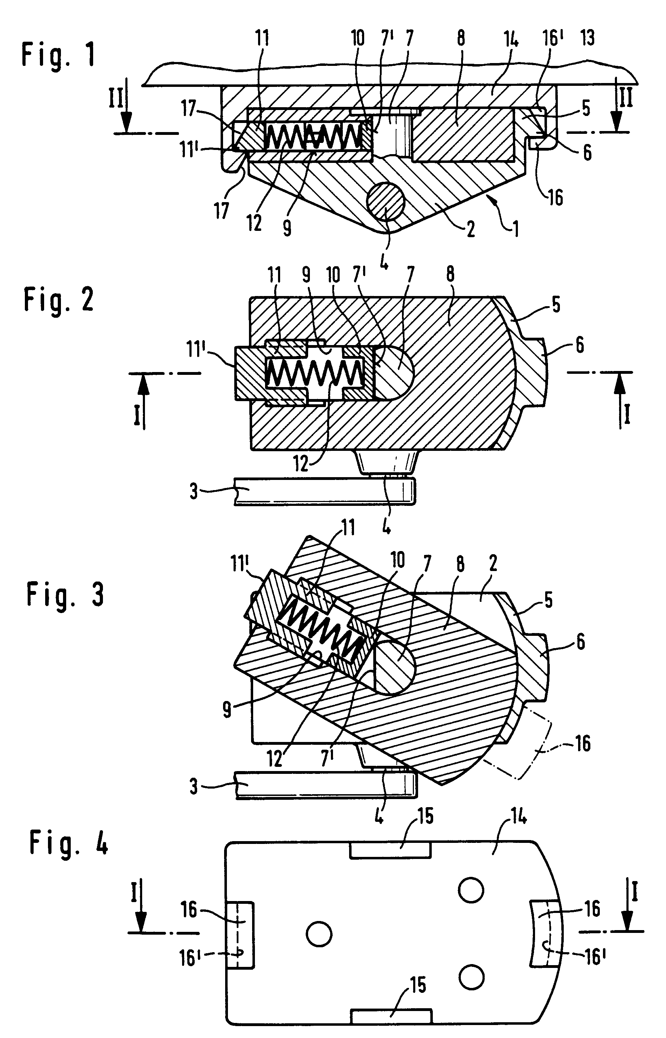

Bei der in den Fig. 1 bis 3 dargestellten Ausführungsform besitzt das Sicherheitspedal 1 einen Grundkörper 2, welcher in üblicher Weise auf einer an einer Tretkurbel 3 eines nicht dargestellten Fahrrades angeordneten Pedalachse 4 drehgelagert ist. An seinem in Gebrauchsstellung des Sicherheitspedales 1 nach rückwärts gewandten Rand besitzt der Grundkörper 2 eine nach oben vorspringende kreisbogenförmige Leiste 5 mit einem nach rückwärts weisenden, im Profil hakenähnlichen Vorsprung 6.

Im Krümmungszentrum der Leiste 5 ist auf der im wesentlichen ebenen Oberseite des Grundkörpers 2 ein vertikaler Zapfen 7 angeordnet, welcher zwischen seinem Kopf und der Oberseite des Grundkörpers 2 einen Schaft mit unrundem Querschnitt gemäß den Fig. 2 und 3 aufweist, wobei an diesem Schaft eine zur Pedalachse 4 parallele und zur Oberseite des Grundkörpers 4 etwa senkrecht erstreckte Planfläche 7′ ausgebildet ist.

Mittels des Zapfens 7 ist auf der Oberseite des Grundkörpers 2 eine drehtellerartige Platte 8 schwenkbar gehaltert, welche die Trittfläche des Pedales 1 bildet. Diese Platte 8 besitzt einen an die Leiste 5 angrenzenden kreisbogenförmigen Rand und ist im übrigen etwa rechteckförmig ausgebildet. Die vertikale Dicke der Platte 8 entspricht etwa der Höhe der Leiste 5, so daß die Oberseite der Platte 8 und der nach oben weisende Rand der Leiste 5 in einer gemeinsamen Ebene liegen.

Im vorderen Teil der Platte 8 ist ein in Längsrichtung derselben erstreckter Führungskanal 9 angeordnet, welcher einerseits einen kolbenartigen Rastschieber 10 und andererseits ein schieberartiges Riegelteil 11 sowie eine zwischen Rastschieber 10 und Riegelteil 11 eingespannte Druckfeder 12 aufnimmt. Die genannte Druckfeder 12 sucht den Rastschieber 10 gegen den Zapfen 7 und das Riegelteil 11 in die in den Fig. 1 bis 3 dargestellte Riegellage zu schieben, in der das Riegelteil 11 mit seinem leistenförmigen Rand 11′ aus dem vorderen Rand der Platte 8 herausragt. Dabei wirken seitlich am Riegelteil 11 angeordnete Stege mit plattenseitigen Anschlägen zusammen und verhindern, daß das Riegelteil 11 aus der Platte 8 herausfallen kann.

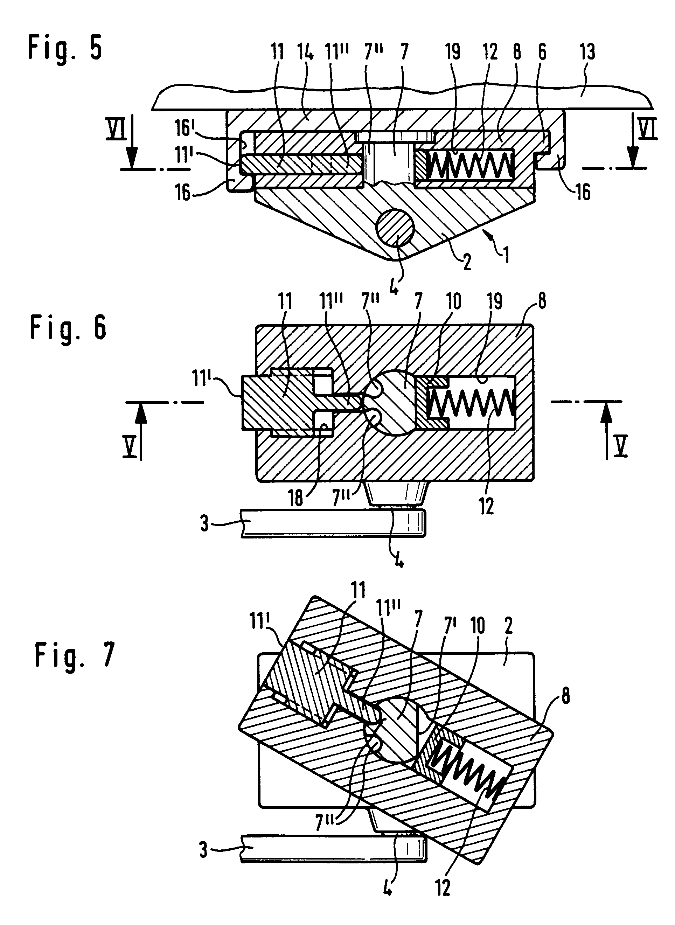

Auf der Unterseite der Sohle des in Fig. 1 nur teilweise dargestellten Schuhs 13 ist ein Plattenteil 14 angeordnet, welches in den Fig. 1 und 4 genauer dargestellt ist. Mittels dieses Plattenteiles 14 läßt sich der Schuh 13 in weiter unten dargestellter Weise am Pedal 1 fixieren.

Das Plattenteil 14 besitzt eine im wesentlichen rechteckige Form mit an den Längsrändern angeordneten, nach unten ragenden Stegen 15, welche voneinander einen der Breite der Platte 8 des Pedales 1 entsprechenden Abstand haben und die seitlichen Längsränder der Platte 8 bei am Pedal 1 fixiertem Schuh 13 übergreifen.

An den Querrändern des Plattenteils 14 sind in Querrichtung des Plattenteiles 14 verlaufende Stege 16 mit Auskehlungen 16′ an den einander zugewandten Seiten angeordnet. Dabei sind die Stege 16 sowie die Auskehlungen 16′ so angeordnet und bemessen, daß sie gemäß Fig. 1 den Vorsprung 6 der Leiste 5 des Grundkörpers 2 sowie den leistenartigen Rand 11′ des Riegelteiles 11 über- bzw. umgreifen können.

Das Sicherheitspedal 1 der Fig. 1 bis 3 sowie das schuhseitige Plattenteil 14 der Fig. 1 und 4 wirken in folgender Weise zusammen:
Der Rastschieber 10, welcher von der Druckfeder 12 ständig gegen den Zapfen 7 gedrängt wird, wirkt mit der Planfläche 7′ des Zapfens 7 zusammen und sucht die Platte 8 in der in Fig. 2 dargestellten Normallage zu halten. Wird die Platte 8 aus dieser Normallage entsprechend Fig. 3 ausgeschwenkt, so wird der Rastschieber 10 gegen den Widerstand der Druckfeder 12 verschoben, wodurch ein Rückstellmoment erzeugt wird, welches die Platte 8 in ihre Normallage gemäß Fig. 2 drängt. Je nach Vorspannung der Druckfeder 12 ist ein Mindestdrehmoment erforderlich, um die Platte 8 aus der Normallage gemäß Fig. 2 auszuschwenken.

Die pedalseitige Platte 8 sowie das schuhseitige Plattenteil 14 bilden pedalseitige und schuhseitige Kupplungsorgane, die miteinander nach Art einer Klauenkupplung zusammenwirken und eine drehfeste Verbindung miteinander ermöglichen. Wird das Plattenteil 14 von oben auf die Platte 8 aufgesetzt, so umgreifen die in Längsrichtung verlaufenden Stege 15 des Plattenteiles 14 die Längsränder der Platte 8, so daß Platte 8 und Plattenteil 14 nur gemeinsam um den Zapfen 7 gedreht werden können.

Zur Fixierung des Plattenteiles 14 und damit des Schuhs 13 am Pedal 1 kann bei in Normallage (Fig. 2) befindlicher Platte 8 zunächst der rückwärtige Steg 16 des Plattenteiles 14 niedergedrückt und in eine Lage gebracht werden, in der der Vorsprung 6 der Leiste 5 am Grundkörper 2 in die Auskehlung 16′ des rückwärtigen Steges 16 des Plattenteiles 14 eingreift. Nunmehr wird der vordere Steg 16 des Plattenteiles 14 niedergedrückt, wobei an diesem vorderen Steg 16 und/oder am Riegelteil 11 angeordnete rampenartige Schrägflächen 17 bewirken, daß das Riegelteil 11 zunächst zunächst gegen den Widerstand der Druckfeder 12 in die Platte 8 eingeschoben wird und dann durch die Druckfeder 12 in Riegeleingriff mit der Auskehlung 16′ des vorderen Steges 16 des Plattenteiles 14 geschoben wird, sobald das Plattenteil 14 vollständig auf der Platte 8 aufliegt.

Damit sind das Plattenteil 14 bzw. der Schuh 13 am Pedal 1 fixiert. Eine Trennung von Schuh 13 und Pedal 1 kann jetzt nur noch dadurch erfolgen, daß der Schuh 13 um die Achse des Zapfens 7 gedreht wird, wobei eine Auslösekraft überwunden werden muß, die durch das Mindestdrehmoment vorgegeben ist, welches zur Verschwenkung der Platte 8 aus der Normallage (Fig. 2) notwendig ist.

Sobald bei der Verschwenkung der Vorsprung 6 der Leiste 5 des Grundkörpers 2 seitlich aus der Auskehlung 16′ des hinteren Quersteges 16 des Plattenteiles 14 austritt, kann der Schuh 13 vom Pedal 1 abgehoben werden.

Die Fixierung des Schuhs 13 am Pedal 1 kann auch in folgender Weise erfolgen:
Zunächst wird der Schuh 13 mit seinem Plattenteil 14 wiederum auf die Platte 8 des Pedales aufgesetzt, derart, daß die Längsstege 15 des Plattenteiles 14 die Längsränder der Platte 8 übergreifen und die Platte 8 sowie das Plattenteil 14 bezüglich der Achse des Zapfens 7 drehfest miteinander gekuppelt sind. Nunmehr wird der vordere Quersteg 16 des Plattenteiles 14 niedergetreten, bis der Rand 11′ des Riegelteiles 11 in der Auskehlung 16′ des vorderen Quersteges 16 einschnappt. Danach wird der Schuh 13 nach rechts oder links gedreht, bis der hintere Quersteg 16 des Plattenteiles 14 eine Lage rechts oder links neben dem Vorsprung 6 an der Leiste 5 des Grundkörpers 2 einnimmt und das Plattenteil 14 flächig auf die Platte 8 aufgesetzt werden kann. Wenn nun der Schuh 13 und damit auch die Platte 8 in die Normallage (Fig. 2) zurückgedreht werden, schiebt sich der Vorsprung 6 an der Leiste 5 des Grundkörpers 2 von der Seite her in die Auskehlung 16′ des hinteren Quersteges 16 des schuhseitigen Plattenteiles 14 ein, so daß der Schuh 13 am Pedal 1 fixiert wird.

Bei der in den Fig. 5 bis 7 dargestellten Ausführungsform des Sicherheitspedales 1 sind der Rastschieber 10 und das Riegelteil 11 in separaten Führungskanälen 18 und 19 an bzw. in der Platte 8 verschiebbar angeordnet. Dabei sucht die Druckfeder 12 den Rastschieber 10 wiederum gegen den Zapfen 7 zu schieben, derart, daß die zapfenseitige Stirnfläche des Rastschiebers 10 mit der Planfläche 7′ des Zapfens 7 zusammenwirken kann und der Rastschieber 10 die Platte 8 in die in Fig. 6 dargestellte Normallage zu drängen bzw. in dieser Lage zu halten sucht.

Das Riegelteil 11 wird mittels einer gesonderten, nicht dargestellten Feder ebenfalls in Richtung des Zapfens 7 gedrängt, wobei ein am Riegelteil 11 angeordneter Stößel 11˝ als Rastelement mit am Zapfen 7 angeordneten Rastausnehmungen 7˝ zusammenwirkt, derart, daß gemäß Fig. 7 eine Verrastung erfolgt, wenn die Platte 8 hinreichend weit nach rechts oder links ausgeschwenkt wird. Der Widerstand der Verrastung ist dabei insgesamt größer als das Drehmoment, welches durch den von der Druckfeder 12 gegen den Zapfen 7 gedrängten Rastschieber 10 ausgeübt wird und die Platte 8 in die Normallage gemäß Fig. 6 zurückzudrängen sucht.

In der in Fig. 7 dargestellten verrasteten Lage ist das Riegelteil 11 in die Kontur der Platte 8 eingeschoben, während das Riegelteil 11 mit seinem Rand 11′ aus der Platte 8 herausragt bzw. herausgedrängt wird, wenn die Platte 8 in die Normallage gemäß Fig. 6 zurückbewegt und dementsprechend die Verrastung zwischen Stößel 19 und der jeweiligen Rastausnehmung 7˝ aufgehoben wird.

Im übrigen unterscheidet sich die in den Fig. 5 bis 7 dargestellte Ausführungsform von der Ausführungsform gemäß den Fig. 1 bis 3 dadurch, daß der nach rückwärts ragende leistenartige Vorsprung 6 am rückwärtigen Rand der Platte 8 angeordnet ist.

Das Sicherheitspedal 1 der Fig. 5 und 7 wirkt wiederum mit einem schuhseitigen Plattenteil 14 zusammen, vgl. die Fig. 4 und 5. Dabei überlappen die Längsstege 15 des Plattenteiles 14 die seitlichen Längsränder der Platte 8, während die ausgekehlten Querstege 16 des Plattenteiles 14 bei am Pedal 1 fixiertem Schuh 13 den an der Platte 8 angeordneten, nach rückwärts weisenden Vorsprung 6 bzw. den Rand 11′ des Riegelteiles 11 aufnehmen.

Die Fixierung des Schuhs 13 am Pedal erfolgt in der Weise, daß der Schuh 13 mit dem Plattenteil 14 von oben auf die Platte 8 aufgesetzt wird, die dabei in der in Fig. 7 dargestellten, seitwärts ausgeschwenkten verrasteten Lage steht. Sollte die Platte 8 noch zunächst ihre Normallage gemäß Fig. 6 einnehmen, so kann sie in die Lage gemäß Fig. 7 gebracht werden, indem der Schul 13 mit dem Plattenteil 14 so auf die Platte 8 aufgesetzt wird, daß die Längsstege 15 die Längsränder der Platte 8 umgreifen. Nunmehr wird der Schuh 13 um die Achse des Zapfens 7 gedreht, wobei die Platte 8 mitgeschwenkt wird.

Sobald die verrastete Lage nach Fig. 7 (oder die zur anderen Seite hin verschwenkte verrastete Lage) erreicht ist, kann der Schuh mit dem Plattenteil 14 so weit niedergedrückt werden, daß das Plattenteil 14 auf der Platte 8 weitestgehend flächig aufliegt und der hintere Quersteg 16 mit seiner Auskehlung 16′ dem hinteren leistenartigen Vorsprung 6 an der Platte 8 umgreift. Nunmehr wird der Schuh 13 unter Aushebung der Verrastung zwischen Stößel 19 und Rastausnehmung 7˝ um die Achse des Zapfens 7 gedreht, um die Platte 8 in die Normallage gemäß Fig. 6 zu bringen. Dabei wird das Riegelteil 11 mit seiner Kante 11′ aus der Platte 8 in die Auskehlung 16′ des vorderen Quersteges 16 des Plattenteiles 14 eingeschoben, so daß das Plattenteil 14 mit dem Schuh 13 am Pedal 1 fixiert ist.

Eine Trennung von Schuh 13 und Pedal 1 ist nunmehr nur noch dadurch möglich, daß der Schuh wiederum derart um die Achse des Zapfens 7 gedreht wird, daß die Platte 8 in die ausgeschwenkte Lage gemäß Fig. 7 mitgenommen wird, wobei sich der Stößel 19 rastend in eine der Rastausnehmungen 7˝ einsenkt und das Riegelteil 11 in die Platte 8 eingeschoben wird. Damit ist die Verriegelung zwischen dem Rand 11′ des Riegelteiles 11 und der Auskehlung 16′ des vorderen Quersteges 16 des Plattenteiles 14 aufgehoben, so daß das Plattenteil 14 bzw. der Schuh 13 nach oben vom Pedal 1 abgehoben werden können.

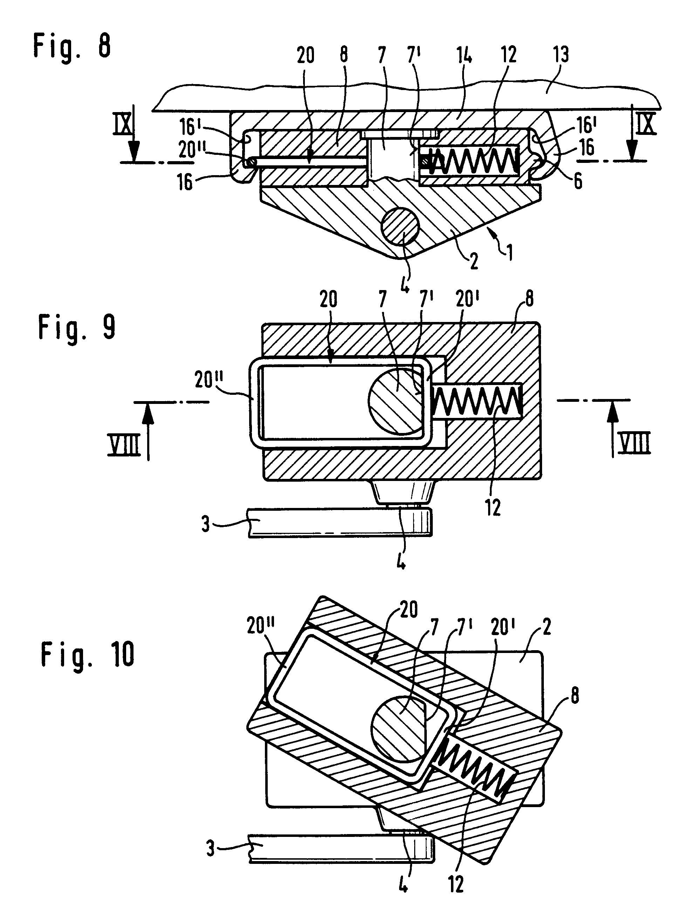

Bei dem in den Fig. 8 bis 10 dargestellten Sicherheitspedal 1 ist innerhalb der Platte 8 ein als rechteckiger Rahmen ausgebildeter Schieber 20 gleitend geführt, dessen rechteckförmige Mittelöffnung vom Zapfen 7 durchsetzt wird. Das eine Querglied 20′ des Schiebers 20, welches von einer Druckfeder 12 gegen den Zapfen 7 gespannt wird und mit dessen Planfläche 7′ zusammenwirkt, hat die Funktion eines Rastkolbens, welcher bei Schwenkung der Platte 8 aus der in Fig. 9 dargestellten Normallage in eine Stellung gemäß Fig. 10 gegen den Widerstand der Feder 12 zurückgeschoben wird und unter dem Druck der Feder 12 im Zusammenwirken mit der Planfläche 7′ ein Rückstellmoment bewirkt, welches die Platte 8 in die Normallage zurückzudrängen sucht. Das andere Querglied 20˝, welches in der Normallage gemäß Fig. 9 aus der Kontur der Platte 8 herausragt, hat die Funktion eines Riegelschiebers, welcher mit der Auskehlung 16′ des vorderen Quersteges 16 des sohlenseitigen Plattenteiles 14 zusammenwirkt. Sobald die Platte 8 in eine der Fig. 10 entsprechende Lage verschwenkt wird, treten der Schieber 20 und damit das Querglied 20˝ vollständig in die Kontur der Platte 8 ein, wodurch die Verriegelung zwischen dem Schieber 20 bzw. dem Querglied 20˝ und der Auskehlung 16′ des vorderen Quersteges 16 des sohlenseitigen Plattenteiles 14 aufgehoben wird.

Zur Fixierung des Schuhs 13 am Pedal 1 wird wiederum das schuhseitige Plattenteil 14 auf die Platte 8 des Pedales 1 aufgesetzt, derart, daß die seitlichen Längsstege 15 des Plattenteiles 14 die Längsränder der Platte 8 umgreifen und der leistenartige Vorsprung 6 am rückwärtigen Querrand der Platte 8 in der Auskehlung 16′ des hinteren Quersteges 16 des Plattenteiles 14 aufgenommen wird. Nunmehr wird der vordere Quersteg 16 des Plattenteiles niedergedrückt, wobei am vorderen Quersteg 16 und/oder am Querglied 20˝ des Schiebers 20 angeordnete Schrägflächen 17 bewirken, daß der Schieber 20 gegen die Kraft der Feder 12 in die Platte 8 eingeschoben wird und von der Feder 12 nachfolgend in die Auskehlung 16′ des vorderen Quersteges 16 des Plattenteiles 14 ausgeschoben wird, sobald das Plattenteil 14 flächig auf der Platte 8 aufliegt.

Stattdessen ist es auch möglich, den Schuh 13 nach Aufsetzen des Plattenteiles 14 auf die Platte 8 um die Achse des Zapfens 7 zu drehen, wobei die seitlichen Längsstege 15, welche die Längsränder der Platte 8 umgreifen, die Platte 8 mitdrehen. Sobald nun aufgrund dieser Drehung der Schieber 20 in die Platte 8 vollständig eingeschoben worden ist, kann das Plattenteil 14 vollständig gegen die Platte 8 niedergetreten werden, so daß Plattenteil 14 und Platte 8 etwa flächig aufeinanderliegen. Beim Zurückdrehen von Schuh 13 und Platte 8 in die Normallage gemäß Fig. 9 schiebt sich dann der Schieber 20 mit dem Querglied 22′ in die Auskehlung 16′ des vorderen Quersteges 16 des Plattenteiles 14, so daß der Schuh 13 wiederum am Pedal 1 fixiert ist.

Die Trennung von Schuh 13 und Pedal 1 erfolgt wiederum dadurch, daß der Schuh 13 und damit auch die Platte 8 um die Achse des Zapfens 7 gedreht werden, bis die Platte 8 eine der Fig. 10 entsprechende Lage erreicht hat, in der das Querglied 20˝ des Schiebers 20 in die Platte 8 eingeschoben ist und dementsprechend die Verriegelung zwischen diesem Querglied 20˝ und der Auskehlung 16′ des vorderen Quersteges 16 des schuhseitigen Plattenteiles 14 aufgehoben ist. Nunmehr kann der Schuh 13 vom Pedal abgehoben werden.

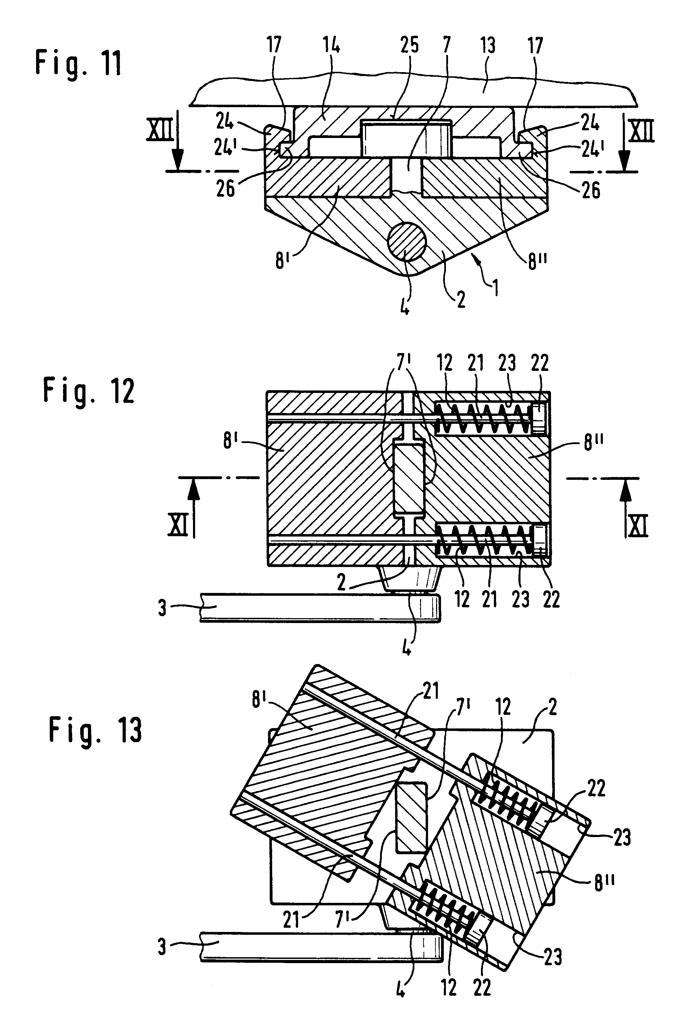

Bei der in den Fig. 11 bis 13 dargestellten Ausführungsform ist auf dem Grundkörper 2 eine aus zwei Platten 8′ und 8˝ bestehende Plattenanordnung angeordnet. In der einen Platte 8′ sind zwei parallele Stangen 21 befestigt, die mit kolbenartigen Köpfen 22 in parallelen Bohrungen 23 der Platte 8˝ gleitend geführt sind. Zwischen den Köpfen 22 und jeweils einer Ringstufe in den Bohrungen 23 sind von den Stangen 21 durchsetzte Schraubenfedern 12 auf Druck eingespannt, welche die kolbenartigen Köpfe 22 in den Fig. 12 und 13 relativ zur Platte 8˝ nach rechts zu drängen suchen und dementsprechend die Platten 8′ und 8˝ mit ihren einander zugewandten Randseiten gegeneinander zu spannen suchen.

Zwischen den Platten 8′ und 8˝ sowie zwischen den Stangen 21 ist der Zapfen 7 angeordnet, dessen Schaft zwischen Kopf des Schaftes 7 und Oberseite des Grundkörpers 12 einen etwa ovalen Querschnitt aufweist und dementsprechend zwei voneinander abgewandte Planflächen 7′ besitzt, die mit den benachbarten Querrändern der Platten 8′ und 8˝ zusammenwirken. Wenn nämlich die Plattenanordnung 8′,8˝ um die Achse des Zapfens 7 aus der in Fig. 12 dargestellten Normallage in eine der Fig. 13 entsprechende Lage ausgeschwenkt wird, so werden die Platten 8′ und 8˝ unter Verbreiterung des Spaltes zwischen ihnen auseinandergedrängt. Dabei werden die Federn 12 zunehmend gespannt, so daß sich die Plattenanordnung 8′,8˝ mit zunehmendem Drehmoment in die Normallage entsprechend Fig. 12 zurückzustellen sucht.

Im übrigen unterscheidet sich die in den Fig. 11 bis 13 dargestellte Ausführungsform von den vorangehend beschriebenen Ausführungsformen dadurch, daß der Kopf des Zapfens 7 etwas aus der Oberseite der Plattenanordnung 8′,8˝ herausragt. Außerdem sind an den voneinander abgewandten Querrändern der Platten 8′ und 8˝ nach oben vorspringende Querstege 24 mit Auskehlungen 24′ an den einander zugewandten Seiten angeordnet.

Das schuhseitige Plattenteil 14 besitzt eine nach unten geöffnete Ausnehmung 25 zur Aufnahme des Kopfes des Zapfens 7 sowie an seinen Querrändern nach vorne und rückwärts gerichtete leistenartige Vorsprünge 26, welche in die Auskehlungen 24′ der Querstege 24 an den Platten 8′ und 8˝ passen. Im übrigen besitzt das schuhseitige Plattenteil 14′ wiederum - entsprechend der Fig. 4 - seitliche Längsstege 15, die die Plattenanordnung 8′,8˝ an den zu den Stangen 21 parallelen Längsrändern formschlüssig zu umgreifen vermögen.

Die Ausführungsform der Fig. 11 bis 13 funktioniert wie folgt:
Zur Fixierung des Schuhs 13 am Pedal 1 wird das schuhseitige Plattenteil 14 derart auf die pedalseitige Plattenanordnung 8′,8˝ gesetzt, daß einer der leistenartigen Vorsprünge 26 in die zugeordnete Auskehlung 24′ des zugeordneten Quersteges 24 der Plattenanordnung 8′,8˝ eingreift. Nunmehr wird das Plattenteil 14 gegen die Plattenanordnung 8′,8˝ niedergetreten, wobei am anderen leistenförmigen Vorsprung 26 und/oder am zugeordneten Quersteg 24 der Plattenanordnung 8′,8˝ angeordnete rampenartige Schrägflächen 17 bewirken, daß die Platten 8′ und 8˝ auseinandergedrängt werden, während das Plattenteil 14 weiter niedergedrückt wird und mit seiner Ausnehmung 25 den Kopf des Zapfens 7 aufnimmt. Sobald das Plattenteil 14 vollständig gegen die Plattenanordnung 8′,8˝ niedergedrückt ist, können beide leistenartige Vorsprünge 26 des Plattenteiles 14 in die zugeordneten Auskehlungen 24′ der Stege 24 an den Platten 8′ und 8˝ riegelartig eintreten, vgl. die Fig. 11. Damit ist der Schuh 13 am Pedal 1 fixiert.

Zur Trennung von Schuh 13 und Pedal 1 muß der Schuh 13 wiederum um die Achse des Zapfers 7 gedreht werden, wobei die Längsstege 15 des Plattenteiles 14 die Plattenanordnung 8′,8˝ mitdrehen. Aufgrund dieser Drehung der Plattenanordnung 8′,8˝ werden die Platten 8′ und 8˝ gemäß Fig. 13 auseinandergedrängt, wodurch sich der Abstand der Querstege 24 mit den Auskehlungen 24′ entsprechend vergrößert, bis die leistenartigen Vorsprünge 26 des Plattenteiles 14 aus dem Riegeleingriff mit den Auskehlungen 24′ der Querstege 24 der Plattenanordnung 8′,8˝ freikommen und der Schuh 13 dementsprechend nach oben vom Pedal 1 abgehoben werden kann.

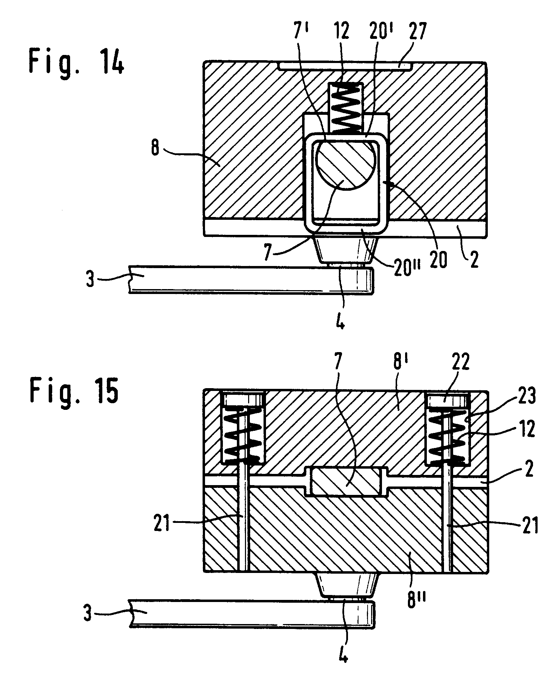

Die Ausführungsform der Fig. 14 entspricht prinzipiell der Ausführungsform der Fig. 8 bis 10. Im Unterschied dazu ist der rechteckige, rahmenförmige Schieber 20 lediglich in Querrichtung der Platte 8 verschiebbar angeordnet, wobei die Planfläche 7′, mit der das Querglied 20′ des Schiebers 20 zusammenwirkt, gegenüber der Ausführungsform der Fig. 9 und 10 um 90^{o} verdreht ist. Dementsprechend ist das Querglied 20˝ des Schiebers 20 in der in Fig. 14 dargestellten Normallage der Platte 8 an einem Längsrand derselben ausgeschoben. Der gegenüberliegende Längsrand der Platte 8 besitzt eine Auskehlung 27. Das zugehörige schuhseitige Plattenteil 14 besitzt dementsprechend seitliche Längsstege mit hakenartigem Profil, derart, daß diese Längsstege in die Auskehlung 27 am einen Langsrand der Platte 8 eingreifen bzw. das seitlich aus dem anderen Längsrand der Platte 8 austretende Querglied 20˝ des Schiebers 20 aufnehmen können. Des weiteren sind am schuhseitigen Plattenteil 14 Querstege angeordnet, welche die Querränder der Platte 8 zu übergreifen vernögen und damit das schuhseitige Plattenteil 14 mit der pedalseitigen Platte 8 nach Art einer Klauenkupplung undrehbar bezüglich der Achse des Zapfens 7 zu verbinden gestatten.

Das in Fig. 15 dargestellte Ausführungsbeispiel entspricht prinzipiell der Ausführungsform der Fig. 11 bis 13 mit dem Unterschied, daß der Spalt zwischen den Platten 8′ und 8˝ in Normallage derselben in Längsrichtung des Pedales 1 verläuft, wobei auch der Bereich mit dem ovalen Querschnitt des Zapfens 7 entsprechend angeordnet ist. Bei Verdrehung der Plattenanordnung 8′,8˝ aus der in Fig. 15 dargestellten Normallage werden die Platten 8′ und 8˝ wiederum auseinandergedrängt. Dabei geben an den voneinander abgewandten Längsrändern der Platten 8′ und 8˝ angeordnete ausgekehlte Leisten in die Auskehlungen passende seitliche leistenartige Vorsprünge des zugehörigen schuhseitigen Plattenteiles 14 frei, welches die vorderen und hinteren Querränder der Plattenanordnung 8′,8˝ mit entsprechenden Querstegen übergreift, um eine bezüglich der Achse des Zapfens 7 undrehbare Verbindung zwischen der Plattenanordnung 8′,8˝ und dem schuhseitigen Plattenteil 14 nach Art einer Klauenkupplung herzustellen.

Im übrigen besitzt das Plattenteil 14 wiederum eine Ausnehmung gemäß Position 25 in Fig. 11 für den Kopf des Zapfens 7, um das Plattenteil 14 relativ zum Zapfen 7 radial unbeweglich halten zu können und um insbesondere zu vermeiden, daß Stöße auf das Plattenteil 14 in Richtung der Stangen 21 zu einer Trennung von Schuh und Pedal führen können.

Allen oben beschriebenen Ausführungsformen ist gemeinsam, daß das schuhseitige Plattenteil 14 bei am Pedal 1 fixiertem Schuh 13 radial zum Zapfen 7 festgehalten wird, solange die pedalseitige Platte 8 bzw. Plattenanordnung 8′,8˝ ihre Normallage oder eine dazu benachbarte Lage einnimmt. Damit können auf die gegebenenfalls federnden Riegelelemente keine Kräfte in Entriegelungsrichtung ausgeübt werden, vielmehr kann eine Entriegelung nur durch Schwenkung der Platte 8 bzw. Plattenanordnung 8′,8˝ mit dem Schuh 13 um die Achse des Zapfens 7 erfolgen, wobei ein durch die Federn 12 bestimmtes Mindestdrehmoment (Auslösekraft) überwunden werden muß.

Die Erfindung ist nicht auf die oben beschriebenen Ausführungsbeispiele beschränkt.

Grundsätzlich ist - gemäß Anspruch 13 - jeweils auch eine kinematisch umgekehrte Anordnung möglich und zweckmäßig, bei der die bei den oben beschriebenen Ausführungsformen schuhseitig angeordneten Elemente, insbesondere das Plattenteil 14 mit den Längs- und Querstegen 15 und 16 (vgl. die Fig. 1, 4 und 5) bzw. den leistenartigen Vorsprüngen 26 (vgl. Fig. 11), am Pedal 1 bzw. am Grundkörper 2 des Pedales 1 angeordnet bzw. befestigt sind; in diesem Falle sind dann die in den oben beschriebenen Ausführungsformen pedalseitig angeordneten Elemente, insbesondere der Zapfen 7 sowie die Platte 8 bzw. die Plattenanordnung 8′,8˝ sowie das Riegelteil 11 bzw. der Schieber 20 und die ausgekehlten Querstege 24, am Schuh bzw. an oder in der Schuhsohle angeordnet.

Auch auf diese Weise kann der der Erfindung zugrundeliegende allgemeine Gedanke verwirklicht werden. Denn der Schuh wird am Pedal im wesentlichen wiederum nur durch formschlüssig zusammenwirkende Riegel- und Gegenriegelteile fixiert, deren Formschluß durch die zur Trennung vom Pedal und Schu, auszuführende Drehbewegung des Schuhs so weit aufgehoben wird, daß der Schuh vom Pedal abgehoben werden kann. Während dieser Drehbewegung muß im wesentlichen wiederum nur der Widerstand der einer Relativdrehung zwischen Schuh und schuhseitigem Kupplungsorgan entgegenwirkenden Auslösekraft bzw. -federung überwunden werden. Dieser Widerstand ist gut reproduzierbar, weil sich die die Auslösekraft bestimmenden Elemente sowie die Auslösefederung geschützt unterbringen lassen, beispielsweise in der Schuhsohle, so daß eine Verschmutzung oder ein schneller Verschleiß nicht zu befürchten sind. Insbesondere muß bei der Trennung von Schuh und Pedal wiederum nicht der Rastwiderstand von schuh- und pedalseitig angeordneten und miteinander zusammenwirkenden federnden Rastelementen und Gegenrastelementen überwunden werden, wie es beim eingangs dargestellten Stand der Technik der Fall ist. Die bei der Drehbewegung des Schuhs erfindungsgemäß erfolgende Entriegelung der Riegel- und Gegenriegelteile erfolgt, ohne daß ein nennenswerter Kraftschluß überwunden werden muß; dementsprechend können Verschleiß bzw. Verschmutzungen an den Riegel- und Gegenriegelteilen auf das Auslöseverhalten keinerlei nennenswerten Einfluß haben.

Alle Ausführungsformen der Erfindung stimmen darin überein, daß die Elemente, welche das Auslöseverhalten bzw. die zur Trennung von Pedal 1 und Schuh 13 zu überwindende Auslösekraft bestimmen, entweder nur am Pedal 1 oder nur am Schuh 13 angeordnet sind. Für die Trennung von Schuh 13 und Pedal 1 muß nämlich der Schuh 13 um die Achse des Zapfens 7 gedreht werden, wobei ein Auslösewiderstand überwunden werden muß, welcher einer Relativdrehung zwischen dem Schuh 13 und einem am Pedal 1 undrehbar halterbaren schuhseitigen Kupplungsorgan (analog 8 bzw. 8′,8˝) bzw. einer Relativdrehung zwischen dem Pedal 1 und einem am Schuh 13 drehfest halterbaren pedalseitigen Kupplungsorgan 8 bzw. 8′,8˝ entgegenwirkt.

## Patentansprüche

1. Sicherheitspedal (1) für Fahrräder u.dgl. zur auslösbaren Fixierung eines dem Pedal (1) angepaßten Schuhs (13), welcher nach Fixierung am Pedal (1) durch eine gegen den Widerstand einer Auslösekraft bzw. -federung (12) ausführbare Schwenkung um eine zur Pedalachse (4) etwa senkrechte Schwenkachse vom Pedal (1) trennbar ist, wobei ein schuhseitiges Kupplungsorgan (14) mit einem pedalseitigen Kupplungsorgan (8;8',8") kuppelbar ist, welches am Pedal (1) aus einer Normallage gegen den Widerstand der Auslösekraft bzw. -federung (12) um die Schwenkachse (7) ausschwenkbar angeordnet ist, und wobei pedalseitige Riegelteile (6,11,20,24,24') sowie zugeordnete schuhseitige Gegenriegelteile (16,16',26,26') bei miteinander gekuppelten schuh- und pedalseitigen Kupplungsorganen (14;8,8',8") sowie in der Normallage befindlichem pedalseitigen Kupplungsorgan (8,8',8") zur Fixierung des Schuhs (13) in im wesentlichen nur formschlüssigem Riegeleingriff stehen und beim Ausschwenken von Schuh (13) und pedalseitigem Kupplungsorgan (8,8',8") aus der Normallage zumindest teilweise zur Freigabe des Schuhs (13) aus dem formschlüssigen Riegeleingriff austreten,
dadurch gekennzeichnet,
daß das schuhseitige Kupplungsorgan (14) durch Formschluß - etwa nach Art einer Klauenkupplung - drehfest mit dem Pedalseitigen Kupplungsorgan (8;8',8") kuppelbar ist.

2. Sicherheitspedal nach Anspruch 1, dadurch gekennzeichnet, daß als pedalseitiges Kupplungsorgan (8,8',8") eine die Trittfläche bzw. ein Trittflächenteil des Pedales (1) bildende Platte (8) bzw. Plattenanordnung (8′,8˝) nach Art eines Drehtellers angeordnet und mit einem als schuhseitiges Kupplungsorgan angeordneten plattenartigen Sohlenbereich bzw. sohlenfesten Teil (14) des Schuhs (13) zusammenwirkt.

3. Sicherheitspedal nach Anspruch 2, dadurch gekennzeichnet, daß an der pedalseitigen Platte (8) bzw. Plattenanordnung (8′,8˝) und/oder am plattenartigen Sohlenbereich oder sohlenfesten Teil (14) aus der jeweiligen Plattenebene herausragende Vorsprünge und/oder Stege (15) angeordnet sind, welche mit Aussparungen, Nuten bzw. Rändern an der Platte (8) bzw. Plattenanordnung (8′,8˝) und/oder am plattenartigen Sohlenbereich bzw. sohlenfesten Teil (14) nach Art der Klauenkupplung zusammenwirken.

4. Sicherheitspedal nach einem der Ansprüche 1 bis 3, dadurch gekennzeichnet, daß ein Rastkolben bzw. -schieber (10,20) am bzw. im pedalseitigen Kupplungsorgan oder an bzw. in der pedalseitigen Platte (8) bzw. Plattenanordung (8′,8˝) verschiebbar geführt und mittels der Auslösefeder ( 12) gegen den Umfang eines zapfenartigen Teiles (7) gespannt ist, welches an einem auf der Pedalachse (4) drehgelagerten Grundkörper (2) des Pedales (1) bzw. an einem grundkörperfesten Teil angeordnet und im Bereich des Rastkolbens bzw. -schiebers (10) einen Querschnitt aufweist, der zur Schwenkachse des pedalseitigen Kupplungsorganes bzw. der pedalseitigen Platte (8) bzw. Plattenanordnung (8′,8˝) teilweise exzentrisch oder abgeflacht ist, derart, daß der Rastkolben bzw. -schieber (10) gegen die Kraft der Auslösefeder (12) verschoben wird, wenn das pedalseitige Kupplungsorgan oder die pedalseitige Platte (8) bzw. Plattenanordnung (8′,8˝) die Normallage verlassen.

5. Sicherheitspedal nach einem der Ansprüche 1 bis 4, dadurch gekennzeichnet, daß die Auslösefeder (12) zwischen dem Rastkolben bzw. -schieber (10) und einem an bzw. in dem pedalseitigen Kupplungsorgan bzw. der pedalseitigen Platte (8) oder Plattenanordnung (8′,8˝) in gleicher Weise wie der Rastkolben bzw. -schieber (10) verschiebbar geführten pedalseitigen Riegelteil (11) eingespannt ist und das Riegelteil (11) in seine Riegellage drängt, derart, daß dieses Riegelteil (11) durch eine an ihm und/oder am zugeordneten schuhseitigen Gegenriegelteil (16,16′) angeordnete Schrägfläche (17) beim Aufsetzen des Schuhs (13) auf das Pedal (1) zunächst gegen die Kraft der Auslösefeder (12) einfedert und sodann von der Kraft der Auslösefeder (12) im Riegeleingriff mit dem Gegenriegelteil (16,16′) gedrängt wird.

6. Sicherheitspedal nach einem der Ansprüche 1 bis 5, dadurch gekennzeichnet, daß die pedalseitigen Riegelteile (20,24,24′) zumindest teilweise am pedalseitigen Kupplungsorgan (8,8′,8˝) angeordnet sind und bei Ausschwenkung desselben aus der Normallage einen Entriegelungshub ausführen.

7. Sicherheitspedal nach einem der Ansprüche 1 bis 6, dadurch gekennzeichnet, daß der Rastkolben bzw. -schieber (20,20′,20˝) mit einem am pedalseitigen Kupplungsorgan oder an der pedalseitigen Platte (8) bzw. Plattenanordnung (8′,8˝) gelagerten pedalseitigen Riegelteil (20˝) zwangsgekoppelt bzw. - vorzugsweise - fest verbunden ist, derart, daß dieses Riegelteil (20˝) durch den vom Rastkolben bzw. -schieber (20,20′,20˝) - beim Ausschwenken des pedalseitigen Kupplungsorganes bzw. der pedalseitigen Platte (8) oder Plattenanordnung (8′,8˝) aus der Normallage - ausgeführten Hub in seine Entriegelungslage verstellt wird.

8. Sicherheitspedal nach einem der Ansprüche 1 bis 6, dadurch gekennzeichnet, daß ein am pedalseitigen Kupplungsorgan bzw. an der pedalseitigen Platte (8) bzw. Plattenanordnung (8′,8˝) angeordnetes pedalseitiges Riegelteil (11,11˝) an bzw. in dem Kupplungsorgan bzw. der Platte (8) oder Plattenarordnung (8′,8˝) verschiebbar geführt ist und - z.B. nach Art eines Nockens bzw. Stößels (11˝) - mit einer Führungsbahn (7˝) an einem auf der Pedalachse (4) drehgelagerten Grundkörper (2) bzw. an einem grundkörperfesten Teil des Pedales (1) zusammenwirkt, derart, daß sich dieses Riegelteil (11,11˝) beim Ausschwenken des pedalseitigen Kupplungsorganes bzw. der pedalseitigen Platte (8) oder Plattenanordnung (8′,8˝) aus der Normallage in seine Entriegelungslage schiebt.

9. Sicherheitspedal nach Anspruch 8, dadurch gekennzeichnet, daß das pedalseitige Riegelteil (11,11˝) federnd gegen die Führungsbahn (7˝) gespannt ist und bei aus der Normallage ausgeschwenktem pedalseitigen Kupplungsorgan bzw. entsprechend verschwenkter pedalseitiger Platte (8) oder Plattenanordnung (8′,8˝) an der Führungsbahn (7˝) federnd einrastet.

10. Sicherheitspedal nach einem der Ansprüche 1 bis 6, dadurch gekennzeichnet, daß die pedalseitige Plattenanordnung zwei in etwa gleicher Ebene erstreckte Platten (8′,8˝) umfaßt, die mittels Federung (12) im Sinne einer Verengung eines Spaltes zwischen einander zugewandten Randseiten der beiden Platten (8′,8˝) gegeneinander verspannt sind, daß zwischen den einander zugewandten Randseiten an einem auf der Pedalachse (4) drehgelagerten Grundkörper (2) ein zur Pedalachse (4) etwa senkrechter Zapfen (7) angeordnet ist, welcher im Bereich der an ihm federnd anliegenden Randseiten der beiden Platten (8′,8˝) einen zur Schwenkachse der Plattenanordnung (8′,8˝) exzentrischen - z.B. ovalen - Querschnitt aufweist, derart, daß die Platten (8′,8˝) beim Ausschwenken der Plattenanordnung (8′,8˝) aus der Normallage unter Verbreiterung des Spaltes auseinandergedrängt und an den Platten (8′,8˝) angeordnete pedalseitige Riegelteile (24,24′) aus ihrer Verriegelung mit den schuhseitigen Gegenriegelteilen (26) aushebbar sind.

11. Sicherheitspedal nach Anspruch 10, dadurch gekennzeichnet, daß quer zum Spalt erstreckte an dem schuhseitigen Kupplungsorgan (14) und/oder pedalseitig an den Platten (8′,8˝) angeordnete Leisten bzw. Stege (15) bei am Pedal (1) fixiertem Schuh (13) quer zum Spalt erstreckte Ränder der Platten (8′,8˝) und/oder des schuhseitigen Kupplungsteiles (14) übergreifen bzw. in quer zum Spalt erstreckte Schlitze eingreifen.

12. Sicherheitspedal nach einem der Ansprüche 10 oder 11, dadurch gekennzeichnet, daß das schuhseitige Kupplungsorgan (14) durch Formschluß am Pedal (1) radial zur Schwenkachse (Zapfen 7) unverschiebbar halterbar ist, z.B. indem der Kopf eines pedalseitigen Zapfens (7) in einer schuhseitigen Ausnehmung (25) aufnehmbar ist.

13. Sicherheitspedal (1) für Fahrräder u.dgl. zur auslösbaren Fixierung eines dem Pedal (1) angepaßten Schuhs (13), welcher nach Fisierung am Pedal (1) durch eine gegen den Widerstand einer Auslösekraft bzw. -federung (12) ausführbare Schwenkung um eine zur Pedalachse (4) etwa senkrechte Schwenkachse vom Pedal (1) trennbar ist, dadurch gekennzeichnet,
daß ein pedalseitiges Kupplungsorgan durch Formschluß - etwas nach Art einer Klauenkupplung - drehfest mit einem schuhseitigen Kupplungsorgan kuppelbar ist, welches am Schuh aus einer Normallage gegen den Widerstand der Auslösekraft bzw. -federung um die Schwenkachse ausschwenkbar angeordnet ist, und
daß schuhseitige Riegelteile sowie zugeordnete pedalseitige Gegenriegelteile bei miteinander gekuppelten schuh- und pedalseitigen Kupplungsorganen sowie in der Normallage befindlichem schuhseitigen Kupplungsorgan zur Fixierung des Schuhs in im wesentlichen nur formschlüssigem Riegeleingriff stehen und beim Ausschwenken des Schuhs relativ zum schuhseitigen Kupplungsorgan auf der Normallage zumindest teilweise zur Freigabe des Schuhs aus dem formschlüssigen Riegeleingriff austreten.

## Claims

1. Safety pedal (1) for bicycles or similar, for the releasable fixation of a shoe (13) adapted to the pedal (1), wherein the shoe, after attachment to the pedal (1), can be separated from the pedal (1) by a rotation which can be executed against the resistance of a release force or of release spring means (12) about a pivot axis approximately Perpendicular to the pedal axis (4), wherein a shoe-side coupling member (14) can be coupled to a pedal-side coupling member (8; 8', 8"), the latter being arranged on the pedal (1) so as to be pivotable about the pivot axis (7) out of a normal position against the resistance of the release force or of the release spring means (12), and wherein pedal-side latching parts (6, 11, 20, 24, 24') and associated shoe-side counter-latching parts (16, 16', 26, 26') are in essentially only form-locked latched engagement when the shoe-side and pedal-side coupling members (14; 8, 8', 8") are mutually coupled and when the pedal-side coupling member (8, 8', 8") is located in the normal position for fixation of the shoe (13), and on pivoting of the shoe (13) and the pedal-side coupling member (8, 8', 8") out of the normal position, come at least partially out of the form-locked latched engagement for the release of the shoe (13),
characterized in that
the shoe-side coupling member (14) can be coupled in a form-locked manner - approximately in the manner of a claw coupling - in rotationally fixed manner to the pedal-side coupling member (8, 8', 8").

2. Safety pedal in accordance with claim 1, characterized in that a plate (8) or plate arrangement (8', 8") which forms the contact surface, or a contact surface portion of the pedal (1), is arranged in the manner of a rotary plate as pedal-side coupling member (8, 8', 8"); and in that this plate or plate arrangement cooperates with a plate-like sole region, or a plate-like part (14) of the shoe (13) fixed to the sole, provided as shoe-side coupling member.

3. Safety pedal in accordance with claim 2, characterized in that projections and/or webs (15) which protrude from the respective plate plane are arranged on the pedal-side plate (8) or plate arrangement (8', 8") and/or on the plate-like sole region or the plate-like part (14) fixed to the sole, these projections and/or webs (15) cooperating in the manner of a claw coupling with depressions, grooves or edges on the plate (8) or plate arrangement (8', 8") and/or on the plate-like sole region or the plate-like part (14) fixed to the sole.

4. Safety pedal in accordance with any one of the claims 1 to 3, characterized in that a latch piston or latch slide (10, 20) is displaceably guided on or in the pedal-side coupling member, or on or in the pedal-side plate (8) or plate arrangement (8', 8"), and is biased by means of the release spring (12) against the periphery of a spigot-like part (7) which is arranged on a base body (2) of the pedal (1), or a part fixed to the base body, the base body being rotatably journalled on the pedal axis (2), said spigot-like part (7) having in the region of the latch piston or latch slide (10) a cross-section which is partially eccentric or flattened toward the pivot axis of the pedal-side coupling member or the pedal-side plate (8) or plate arrangement (8', 8"), in such a manner that the latch piston or latch slide (10) is displaced against the force of the release spring (12) when the pedal-side coupling member or the pedal-side plate (8) or plate arrangement (8', 8") leaves the normal position.

5. Safety pedal in accordance with any one of the claims 1 to 4, characterized in that the release spring (12) is trapped between the latch piston or slide (10) and a pedal-side latching part (11), which is displaceably guided on or in the pedal-side coupling member or the pedal-side plate (8) or plate arrangement (8', 8") in the same manner as the latch piston or slide (10), the release spring (12) urging the latching part (11) into its latching position in such a manner that, on placement of the shoe (13) onto the pedal (1) and owing to an inclined surface (17) provided on the latching part (11) and/or on the associated shoe-side counter-latching part (16, 16'), this latching part firstly yields due to the force of the release spring (12) and is then urged in latching engagement with the counter-latching part (16, 16') by the force of the release spring (12).

6. Safety pedal in accordance with any one of the claims 1 to 5, characterized in that the pedal-side latching parts (20, 24, 24') are at least partly arranged on the pedal-side coupling member (8, 8', 8") and execute an delatching stroke when the latter is pivoted out of the normal position.

7. Safety pedal in accordance with any one of the claims 1 to 6, characterized in that the latch piston or slide (20, 20', 20") is forcibly or preferably fixedly connected to a pedal-side latching part (20') mounted on the pedal-side coupling member or on the pedal-side plate (8) or plate arrangement (8', 8"), in such a manner that this latching part (20") is displaced into its delatching position by the stroke exerted by the latch piston or slide (20, 20', 20") when the pedal-side coupling member or the pedal-side plate (8) or plate arrangement 8', 8") is pivoted out of the normal position.

8. Safety pedal in accordance with any one of the claims 1 to 6, characterized in that a pedal-side latching part (11, 11"), arranged on the pedal-side coupling member or on the pedal-side plate (8) or plate arrangement (8', 8"), is displaceably guided on or in the coupling member or the plate (8) or plate arrangement (8', 8") and cooperates, for example in the manner of a cam or of a cam follower (11"), with a guide track (7") on a base body (2) rotatably journalled on the pedal axis (4) or on a part of the pedal (1) fixed with respect to the base body, in such a manner that this latching part (11, 11") is displaced out of the normal position into its delatched position on pivoting of the pedal-side coupling member or of the pedal-side plate (8) or plate arrangement (8', 8").

9. Safety pedal in accordance with claim 8, characterized in that the pedal-side latching part (11, 11") is resiliently urged against the guide track (7") and resiliently latches onto the guide track (7") when the pedal-side coupling member is pivoted out of the normal position, or when the pedal-side plate (8) or plate arrangement (8', 8") is correspondingly pivoted.

10. Safety pedal in accordance with one of the claims 1 to 6, characterized in that the pedal-side plate arrangement comprises two plates (8', 8") extending approximately in the same plane, which are urged against each other by means of a spring system (12) in the sense of a narrowing of a gap between mutually facing edge sides of the two plates (8', 8"); in that a spigot (7) approximately Perpendicular to the pedal axis (4) is arranged between the mutually facing edge sides on a base body (2) rotatably journalled on the pedal axis (4), said spigot having in the region of the edge sides of the two plates (8', 8") which are in resilient contact against the spigot, a cross-section which is eccentric with respect to the pivot axis of the plate arrangement (8', 8"), for example an oval cross-section, in such a manner that on Pivoting the plate arrangement (8', 8") out of the normal position the plates (8', 8") are urged apart from each other with a broadening of the gap, and pedal-side latching parts (24, 24') arranged on the plates (8', 8") can be raised from their latching engagement with the shoe-side counter-latching parts (26).

11. Safety pedal in accordance with claim 10, characterized in that, when the shoe (13) is fixed on the pedal (1), strips or webs (15) extending transversely with respect to the gap and arranged on the shoe-side coupling member (14) and/or on the pedal-side plates (8', 8") engage over edges, which extend transversely with respect to the gap, of the shoe-side plates (8', 8") and/or of the shoe-side coupling part (14) or engage into slots which extend transversely with respect to the gap.

12. Safety pedal in accordance with any one of the claims 10 or 11, characterized in that the shoe-side coupling member (14) can be radially undisplaceably held with respect to the pivot axis (spigot 7) by form-locked engagement on the pedal (1), for example in that the head of a spigot (7) on the pedal side can be accommodated in a shoe-side recess (25).

13. Safety pedal (1) for bicycles or similar, for the releasable fixation of a shoe (13) adapted to the pedal (1), wherein the shoe, after fixation to the pedal (1), can be separated from the pedal by a rotation which can be executed against the resistance of a release force or of a release spring means (12) about a pivot axis approximately perpendicular to the pedal axis (4),
characterized in that
a pedal-side coupling member can be coupled in a form-locked manner and in a rotationally fixed manner to a shoe-side coupling member, in the manner of a claw coupling, the coupling member being arranged on the shoe so as to be pivotable about the pivot axis from a normal position against the resistance of the release force or of the release spring means; and
in that, when the shoe-side and pedal-side coupling members are mutually coupled and the shoe-side coupling member is located in the normal position, shoe-side latching parts and associated pedal-side counter-latching parts are in latching engagement and in essentially only form-locked manner for fixation of the shoe, and come at least partially out of the form-locked engagement for releasing the shoe when the shoe is pivoted out of the normal position relative to the shoe-side coupling member.

## Revendications

1. Pédale de sécurité (1) pour bicyclettes et analogues permettant la fixation amovible d'une chaussure (13) adaptée à la pédale (1) et qui, après fixation sur la pédale (1), peut être séparée de cette dernière au moyen d'un pivotement, pouvant être exécuté à l'encontre de la résistance opposée par une force ou un ressort de libération (12), autour d'un axe de rotation approximativement perpendiculaire à l'axe (4) de la pédale, et où il est prévu un organe d'accouplement (14), situé côté chaussure et pouvant être accouplé à un organe d'accouplement (8;8',8"), situé côté pédale et qui est disposé sur la pédale (1) de façon à pouvoir être écarté, par pivotement autour de l'axe de pivotement (7), d'une position normale à l'encontre de la résistance opposée par la force ou le ressort de libération (12), et où an outre des éléments de verrouillage (6,11,20, 24,24'), situés côté pédale, ainsi que des éléments de verrouillage antagonistes associés (16,16',26, 26'), situés côté chaussure, entrent en prise de verrouillage, dans l'essentiel seulement par complémentarité de formes, pour une fixation de la chaussure (13), lorsque les organes d'accouplement (14;8,8',8") situés côté chaussure et côté pédale sont accouplés mutuellement et lorsque l'organe d'accouplement (8,8',8") situé côté pédale se trouve dans la position normale, alors que, lorsque la chaussure (13) et l'organe d'accouplement (8,8',8") situé côté pédale sont écartés par pivolement de la position normale, ils se dégagent de leur condition de verrouillage par complémentarité de formes, au moins partiellement, pour libérer la chaussure (13), caractérisée en ce que l'organe d'accouplement (14) situé côté chaussure peut être accouplé, par complémentarité de formes -à peu près à la façon d'un accouplement à griffes- de façon non tournante avec l'organe d'accouplement (8,8',8") situé côté pédale.

2. Pédale de sécurité selon la revendication 1, caractérisée en ce que, comme organe d'accouplement (8,8',8") situé côté pédale, une plaque (8), ou un ensemble de plaques (8',8"), qui forme la surface d'appui ou une partie de la surface d'appui du pied sur la pédale (1), est agencé à la manière d'un plateau rotatif et coopère avec une zone de la semelle, ou une partie (14) solidaire de la semelle, de la chaussure (13), ayant une forme analogue à une plaque et prévue en tant qu'organe d'accouplement situé côté chaussure.

3. Pédale de sécurité selon la revendication 2, caractérisée en ce que, sur la plaque (8) ou l'ensemble de plaques (8',8") et/ou sur la zone de semelle en forme de plaque ou la partie (14) solidaire de la semelle, il est prévu des protubérances et/ou barrettes (15), qui font saillie du plan respectif de la plaque et coopèrent avec des évidements, des rainures ou des bords, situés sur la plaque (8) ou sur l'ensemble de plaques (8',8") et/ou sur la zone de semelle en forme de plaque ou sur la partie (14) solidaire de la semelle, à la manière d'un accouplement à griffes.

4. Pédale de sécurité selon une des revendications 1 à 3, caractérisée en ce qu'un piston ou poussoir d'encliquetage (10,20) est guidé en translation sur ou dans l'organe d'accouplement, situé côté pédale, ou bien sur ou dans la plaque (8) ou l'ensemble de plaques (8,8"), situé côté pédale, et est maintenu par un ressort de libération (12) contre le pourtour d'une partie (7) en forme de têton, qui est disposée sur un corps de base (2) de la pédale (1), et montée de façon à pouvoir tourner autour de l'axe (4) de cette dernière, ou bien sur une partie solidaire du corps de base, et possède, dans la zone du piston ou du poussoir d'encliquetage (10), une section transversale qui est en partie excentrée ou aplatie par rapport à l'axe de pivotement de l'organe d'accouplement situé côté pédale, ou bien de la plaque (8) ou de l'ensemble de plaques (8',8") situé côté pédale, de telle sorte que le piston ou poussoir d'encliquetage (10) soit déplacé, à l'encontre de la force du ressort de libération (12), lorsque l'organe d'accouplement situé côté pédale, ou bien la plaque (8) ou l'ensemble de plaques (8',8") situé côté pédale, quitte la position normale.

5. Pédale de sécurité selon une des revendications 1 à 4, caractérisée en ce que le ressort de libération (12) est maintenu entre le piston ou le poussoir d'encliquetage (10) et un élément de verrouillage (11), situé côté pédale et guidé en translation sur ou dans l'organe d'accouplement situé côté pédale ou bien la plaque (8) ou l'ensemble de plaques (8',8") situé côté pédale, de la même manière que le piston ou poussoir d'encliquetage (10), et pousse l'élément de verrouillage (11) jusque dans sa position verrouillée de telle sorte que cet élément de verrouillage (11) s'infléchisse élastiquement initialement, en opposition à la force du ressort de libération (12), lors de l'application de la chaussure (13) sur la pédale (1), sous l'effet d'une surface inclinée (17) prévue sur cet élément de verrouillage et/ou sur l'élément de verrouillage antagoniste associé (16,16') situé côté chaussure, et soit ensuite repoussé par la force du ressort de libération (12) lors de l'entrée en prise de verrouillage avec l'élément de verrouillage antagoniste (16,16').

6. Pédale de sécurité selon une des revendications 1 à 5, caractérisée en ce que les éléments de verrouillage (20,24,24') situés côté pédale sont disposés au moins en partie sur l'organe d'accouplement (8,8',8") situé côté pédale et effectuent une course de déverrouillage lorsqu'ils sont écartés par pivotement de la position normale.

7. Pédale de sécurité selon une des revendications 1 à 6, caractérisée en ce que le piston ou poussoir d'encliquetage (20,20',20") est en accouplement forcé ou bien -de préférence- est en liaison rigide avec un élément de verrouillage (20"), situé côté pédale et monté à rotation sur la plaque (8) ou sur l'ensemble de plaques (8',8"), de telle sorte que cet élément de verrouillage (20") soit amené dans sa position déverrouillée sous l'effet du mouvement effectué par le piston ou le poussoir d'encliquetage (20,20',20")- lorsque l'organe d'accouplement situé côté pédale, ou bien la plaque (8) ou l'ensemble de plaques (8',8") situé côté pédale, est écarté par pivotement de la position normale.

8. Pédale de sécurité selon une des revendications 1 à 6, caractérisée en ce qu'un élément de verrouillage (11,11"), situé côté pédale et disposé sur l'organe d'accouplement situé côté pédale ou bien sur la plaque (8) ou l'ensemble de plaques (8',8") situé côté pédale, est guidé en translation sur ou dans l'organe d'accouplement ou bien la plaque (8) ou l'ensemble de plaques (8',8") et coopère -par exemple à la manière d'une came ou d'un poussoir (11")- avec une voie de guidage (7") située sur un corps de base (2), monté de façon à pouvoir tourner autour de l'axe (4) de la pédale, ou sur une partie, solidaire du corps de base, de la pédale (1), de telle sorte que cet élément de verrouillage (11,11") soit poussé dans sa position de déverrouillage lorsque l'organe d'accouplement situé côté pédale, ou bien la plaque (8) ou l'ensemble de plaques (8',8") situé côté pédale, est écarté par pivotement de la position normale.

9. Pédale de sécurité selon la revendication 8, caractérisée en ce que l'élément de verrouillage (11,11") situé côté pédale est serré élastiquement contre la voie de guidage (7") et il est engagé élastiquement dans la voie de guidage (7") lorsque l'organe d'accouplement situé côté pédale, ou bien la plaque (8) ou l'ensemble de plaques (8',8"), situé côté pédale et ayant tourné en correspondance, a été écarté par pivotement de la position normale.

10. Pédale de sécurité selon une des revendications 1 à 6, caractérisée en ce que l'ensemble de plaques situé côté pédale comporte deux plaques (8',8"), s' étendant approximativement dans le même plan et qui sont poussées l'une vers l'autre au moyen d'un ressort (12) dans le sens d'un rétrécissement d'un intervalle entre des bords marginaux, dirigés l'un vers l'autre, des deux plaques (8',8"), en ce qu'il est prévu, entre les bords dirigés l'un vers l'autre, sur un corps de base (2) monté en rotation sur l'axe (4) de la pédale, un têton (7) orienté approximativement perpendiculairement à l'axe (4) de la pédale et qui possède, dans la zone des bords s'appliquant élastiquement contre lui, des deux plaques (8',8"), une section excentrique -par exemple ovale- par rapport à l'axe de pivotement de l'ensemble de plaques (8',8") de telle sorte que les plaques (8',8"), quand l'ensemble de plaques (8',8") pivote à partir de la position normale, soient écartées l'une de l'autre en élargissant l'intervalle et que les éléments de verrouillage (24,24'), situés côté pédale et disposés sur les plaques (8',8"), puissent être dégagés de leur condition de verrouillage avec les éléments de verrouillage antagonistes (26) situés côté chaussure.

11. Pédale de sécurité selon la revendication 10, caractérisée en ce que des réglettes ou barrettes (15), s'étendant transversalement par rapport à l'intervalle précité et disposées sur l'organe d'accouplement (14) situé côté chaussure et/ou sur les plaques (8',8") situées côté pédale, s'accrochent, quand la chaussure (13) est fixée sur la pédale (1), autour de bords, s'étendant perpendiculairement à l'intervalle, des plaques (8',8") et/ou de l'organe d'accouplement (14) situé côté chaussure, ou bien s'accrochent dans des fentes s'étendant perpendiculairement à l'intervalle précité.

12. Pédale de sécurité selon une des revendications 10 et 11, caractérisée en ce que l'organe d'accouplement (14) situé côté chaussure peut être retenu par complémentarité de formes sur la pédale (1), de manière à être immobile radialement par rapport à l'axe de pivotement (têton 7), par exemple par le fait que le bout d'un têton (7) situé côté pédale peut être engagé dans un évidement (25) prévu côté chaussure.

13. Pédale de sécurité (1) pour bicyclettes et autres permettant la fixation amovible d'une chaussure (13) adaptée à la pédale (1) et qui, après fixation sur la pédale (1), peut être séparée de cette dernière au moyen d'un pivotement, pouvant être effectué à l'encontre de la résistance opposée par une force ou un ressort de libération (12), autour d'un axe de rotation approximativement perpendiculaire à l'axe (4) de la pédale, caractérisée en ce qu'un organe d'accouplement situé côté pédale peut être accouplé de façon non tournante et par complémentarité de formes -à peu près à la façon d'un accouplement à griffes- avec un organe d'accouplemént situé côté chaussure, et disposé sur la chaussure de façon à pouvoir être écarté d'une position normale par pivotement autour de l'axe de pivotement à l'encontre de la résistance opposée par la force ou le ressort de libération, et en ce que des éléments de verrouillage situés côté chaussure ainsi que des éléments de verrouillage antagonistes associés et situés côté pédale entrent en prise de verrouillage dans l'essentiel uniquement par complémentarité de formes, lorsque les organes d'accouplement situés côté chaussure et côté pédale sont accouplés entre eux et également lorsque l'organe d'accouplement situé côté chaussure se trouve dans la position normale, en vue d'une fixation de la chaussure alors que, lorsque la chaussure est écartée de la position normale par rapport à l'organe d'accouplement situé côté chaussure, ils sont écartés de la condition de verrouillage par complémentarité de formes, au moins en partie, en vue d'une libération de la chaussure.
